# EUROPEAN PATENT APPLICATION

(11) **EP 4 550 095 A1**
(43) Date of publication of application: **07.05.2025**
(21) Application number: 24209230.2
(22) Date of filing: 28.10.2024
(51) Int. Cl.: G06F 3/01, G06F 3/04815, G06T 19/00

(54) **AUGMENTED AND VIRTUAL REALITY AVATAR POSITIONING**

(30) Priority: 03.11.2023 GB 202316888
(71) Applicant: Sony Interactive Entertainment Europe Limited, London W1F 7LP (GB)
(72) Inventor: LEYTON, Pedro Federico Quijada, London W1F 7LP (GB); KEYS, Owen Bruce, London W1F 7LP (GB); SANDERS, Ashley John, London W1F 7LP (GB); VISCIGLIA, Aron Giuseppe, London W1F 7LP (GB); BRISLIN, Simon Andrew St John, London W1F 7LP (GB); RYAN, Nicholas Anthony Edward, London W1F 7LP (GB)
(74) Representative: Murgitroyd & Company

(57) **Abstract**

A computer-implemented method is provided. The method includes generating an augmented reality environment, determining a number of virtual avatars requiring an avatar space within said augmented reality environment, determining a number of physical avatar spaces that are available for occupation within the augmented reality environment, comparing the number of virtual avatars requiring an avatar space to the number of available physical avatar spaces and, when the number of virtual avatars requiring an avatar space within the augmented reality environment is less than or equal to the number of available physical avatar spaces, assigning a different available physical avatar space to each virtual avatar.

## Description

### Technical Field

The present disclosure relates to a computer-implemented method for positioning virtual avatars in an augmented reality or virtual reality environment, a system for carrying out said method, and a computer program product comprising instructions which cause a computer to carry out said method.

### Background

In mixed-reality, the physical or real-world and the virtual world work together to create an augmented reality environment. It is desirable to create a seamless transition between the virtual and real-world parts of the environment that a user is experiencing.

Images are displayed virtually, which may overlap or coincide with the physical or real-world environment. This can include, for example, displaying virtual objects (e.g. two or three dimensional images) on tabletops, walls, chairs and floors of the real-world environment.

A virtual avatar is a graphical representation of a user's character on a digital platform. A virtual avatar can have a two-dimensional form (e.g. an image or icon) or a three-dimensional form (e.g. the character in a computer game). A virtual avatar may be required to be positioned in a virtual or augmented reality environment, to represent the associated user in said environment.

### Summary

Aspects of the invention are set out in the accompanying independent claims, further features according to embodiments are set out in the dependent claims.

In a first aspect, a computer-implemented method is provided, the method comprising generating an augmented reality environment based on input data defining a real-world environment, determining a number of virtual avatars requiring an avatar space within the augmented reality environment, determining a number of physical avatar spaces that are available for occupation by a virtual avatar within the augmented reality environment, wherein each physical avatar space corresponds to a physical space comprising a physical surface for receiving a single user in the real-world environment, comparing the number of virtual avatars requiring an avatar space within the augmented reality environment to the number of available physical avatar spaces, and when the number of virtual avatars requiring an avatar space within the augmented reality environment is less than or equal to the number of available physical avatar spaces, assigning a different available physical avatar space to each virtual avatar.

In a second aspect, a computing device is provided, the computing device comprising a processor and memory, the memory communicatively coupled to the processor, the memory comprising instructions operable, when executed by the processor, to cause the processor to carry out the method of the first aspect.

In a third aspect, there is provided a computer program comprising instructions which when executed in a computerized system comprising at least one processor, cause the at least one processor to carry out the method of the first aspect.

In a fourth aspect, there is provided a non-transitory computer-readable medium comprising instructions which when executed in a computerized system comprising at least one processor, cause the at least one processor to carry out the method of the first aspect.

In the present disclosure a virtual avatar may be equivalently referred to as an avatar.

The first aspect (and thus the second and third aspects) of the present disclosure thus advantageously provides a method for allocating a virtual avatar (associated with a user) a space (i.e. an avatar space) to occupy within a mixed-reality environment comprising an augmented reality (AR) environment or a virtual environment. This avatar space may be a space where the avatar can sit down or stand. In order to allocate a virtual avatar entering an AR environment an avatar space, the method first determines how many avatars are in need of a space (e.g. how many avatars are new to the AR or VR environment) and compares this number to the number of available (i.e. unassigned or unoccupied) physical avatar spaces in the AR environment such that each avatar can be assigned to one of the available avatar spaces. The present disclosure thus advantageously allows one or more avatars within a mixed-reality environment to be accommodated within an avatar space such that the user experience is enhanced.

A physical avatar space is associated with a physical space that exists in the real-world represented by the augmented reality environment, wherein the physical space has a physical surface that can receive a physical user (e.g. the user can sit down or stand up). As such, in the present disclosure virtual avatars are positioned in avatar spaces that correspond to physical locations where a person in the real-world environment would sit or stand. This can improve the realism of the augmented reality (AR) environment.

Optionally, a physical space may be pre-determined to be a space comprising a physical surface on which an avatar can sit.

Optionally, the physical surface is a surface that (when a user is received thereon) provides the user with a full view of a focal point of the AR environment (e.g. a game device, e.g. a tv, e.g. an activity). Thus, in some embodiments, the physical surface is such that a user received on the physical surface in the real-world would not have a partially or fully obstructed view of the focal point of the AR environment.

It will be appreciated that the method steps of the first aspect may be performed in any desired order and the order in which the method steps are presented is not limiting. However, optionally, the method steps may be performed sequentially in the order in which they are presented in the present disclosure.

Optionally, the method further comprises receiving an image of the real-world environment and using that image to generate the AR environment.

Optionally, the input data comprises input environment data such as input video game data or activity data. As such, the augmented reality environment may be generated to facilitate a video game to be played or an activity to be conducted (e.g. watching a film with friends).

Optionally, the input data may comprise an image or scan of the user's real-world physical environment, such that the augmented reality environment is generated to represent the user's physical environment.

Optionally, generating the AR environment comprises scanning the real-world environment to be represented as an AR environment, wherein the scan generates the input data on which the AR environment is based.

Optionally, the method further comprises receiving an image of the real-world environment. The image may be any suitable and/or desirable image such as a multi-spectral image (e.g. a photographic image) or a LIDAR image (e.g. by scanning an electromagnetic beam and measuring time of flight). This image may be used to generate the AR environment and/or determine the presence of one or more physical surfaces.

Optionally, the method comprises processing the image to identify one or more physical surfaces. The processing step may comprise any suitable and/or desirable processing or analysis technique such as feature detection and matching, Harris Corner Detection, Scale-Invariant Feature Transformation, Speeded-Up Robust Features, Features from Accelerated Segment Test, Binary Robust Independent Elementary Features, Orientated FAST and Rotated BRIEF.

Optionally, the method comprises assigning a physical space to encompass each of the physical surfaces identified in the processing step. The physical space may be two-dimensional (e.g. two dimensional projection on the plane comprising the floor). Alternatively, the physical space may be a three-dimensional volume. It will be appreciated that the physical space may extend beyond the dimensions of the physical surface. For example, if the identified physical surface is a seat of a chair, the physical space may also include an area beyond the seat where a user's legs would extend and their feet would contact the floor when a user is sat on the chair in a conventional manner.

Optionally, each physical surface is part of an item of furniture located within the real-world environment. Each physical space may define an area or volume that encompasses the physical surface.

Optionally, the volume further encompasses all or part of a given item of furniture comprising the physical surface and/or a space beyond the physical surface that would be occupied by a user when the user is received on the physical surface.

Optionally, the method comprises assigning a physical avatar space within the augmented reality environment to correspond to the physical space in the real-world environment.

Optionally, the step of determining the number of available physical avatar spaces further comprises determining if a physical space in the real-world environment is assigned to or occupied by a user.

Optionally, the step of determining the number of available physical avatar spaces further comprises determining if a physical avatar space is assigned to or occupied by another virtual avatar in the AR environment.

It will thus be appreciated that a physical avatar space that is determined to be occupied or assigned to an avatar is not available for assignment to another avatar. When the physical space is not assigned to or occupied by a user, and the physical avatar space is not assigned to or occupied by a virtual avatar, the method may further comprise designating the physical avatar space as an available physical avatar space.

The method of determining if a physical space is assigned or occupied by a user in the real-world may be performed in any suitable and/or desirable way.

Optionally, the method may comprise processing an image to identify the presence of a user. Optionally, the method may comprise processing an image using a feature analysis technique to identify the position of users in the real-world.

Optionally, the method may comprise scanning the real-world environment for a signal associated with a user. In some embodiments each user (or their headset/gaming controller) may comprise a tag such as an RFID tag which can be detected to identify the presence and position of a user.

Optionally, the method may comprise storing a ledger of assignments of virtual avatars to physical avatar spaces and assignments of users to physical spaces within the environment. The ledger may be stored within a memory or storage resource, such that the ledger may be accessed when performing further assignments. For example, the method may comprise updating a list of available physical avatar spaces to remove a space once it has been assigned to a virtual avatar.

A user within the real-world environment may have a virtual avatar associated with them in the corresponding AR environment. As such, if a user is sat within a physical space in the real-world environment, it may be desirable to assign the users associated virtual avatar to the physical avatar space corresponding to the physical space that the user occupies. The method may thus further comprise determining if a physical space in the real-world environment is occupied by a first user in the real-world environment and assigning the user's virtual avatar to the physical avatar space in the augmented reality environment corresponding to the physical space occupied by the user in the real-world environment.

Optionally, the method further comprises configuring or arranging each virtual avatar to sit or stand within the physical avatar space (e.g. on the virtual representation of the physical surface) to which they have been assigned.

Optionally, when the number of virtual avatars requiring an avatar space is greater than the number of available physical avatar spaces, the method comprises assigning a virtual avatar to each available physical avatar space and then, generating either an augmented avatar space or a virtual avatar space for the remaining (e.g. excess) virtual avatars (i.e. the avatars in excess of the available physical avatar spaces that have not been assigned a physical avatar space).

Optionally, when the number of virtual avatars requiring an avatar space is greater than the number of available physical avatar spaces, the method further comprises determining a number of augmented avatar spaces that are available for assignment to a virtual avatar within the augmented reality environment.

Each augmented avatar space may be sized to receive a single virtual avatar. Each augmented avatar space may correspond to a physical space within the real-world environment that does not include a physical surface suitable for receiving a user.

For example, it may be appreciated that a real-world environment may comprise items of furniture that a user may sit on (e.g. chairs, e.g. a sofa), which may define the physical avatar spaces, as well as portions of empty space where there is no furniture and thus no physical surface on which a user could sit. These portions of empty space may define one ore more augmented avatar spaces.

Optionally, the step of determining the number of available augmented avatar spaces comprises determining if the augmented space has been previously assigned to another avatar. When the augmented avatar space is not assigned to an avatar, the method may further comprise designating the augmented avatar space as an available augmented avatar space.

Optionally, when the number of virtual avatars is greater than the number of available physical avatar spaces and is less than or equal to the number of augmented avatar spaces, the method further comprises assigning a respective virtual avatar to each augmented avatar space.

Optionally, the method further comprises updating the augmented reality environment to create, in each augmented avatar space, a surface (e.g. a virtual surface such as virtual item of furniture comprising a surface) for receiving the virtual avatar.

Thus, an augmented avatar space may be positioned in a physical space of the real-world environment that is absent a physical surface. A virtual surface (e.g. as part of a virtual item of furniture) may be created within the AR environment and located in the augmented avatar space for an avatar to occupy (e.g. sit on). Thus, an augmented avatar space may comprise a virtual representation of an item of furniture that has no physical corresponding item in the real-world.

Optionally, the step of updating the augmented reality environment to create, in each assigned augmented avatar space, a surface for receiving the virtual avatar, comprises generating a virtual item of furniture comprising the surface in the augmented avatar space.

Optionally, each augmented avatar space does not overlap with a physical avatar space. In other words, physical avatar spaces and augmented avatar spaces may be discrete spaces that do not intersect.

Optionally, each augmented avatar space comprises a volume suitable for locating a virtual item of furniture comprising the surface for receiving a single virtual avatar.

Optionally, the step of determining the number of augmented avatar spaces further comprises identifying one or more unoccupied spaces within the augmented reality environment or the real-world environment.

The step of identifying unoccupied spaces may comprise any suitable and/or desirable processing technique. In some embodiments, the method may comprise receiving an image of the real-world environment and removing any features/physical spaces identified to identify the unoccupied spaces.

Optionally, the method comprises determining if each of the one or more unoccupied spaces can encompass one or more augmented avatar spaces.

Optionally, when it is determined that an unoccupied space can encompass one or more augmented avatar spaces, the method comprises defining a portion of the unoccupied space as an augmented avatar space.

Optionally, if it is determined that a discrete part of the unoccupied space may only fit one augmented avatar space, the largest possible augmented avatar space is assigned to that part of the unoccupied space. Optionally, if a part of the unoccupied space can fit two or more augmented avatar spaces, the method may comprise optimising the size and/or arrangement of the two or more augmented avatar spaces to fit the greatest number of augmented avatar spaces within the space. As such, the use of space in the AR environment may be optimised.

Optionally, in addition to determining whether a portion of the unoccupied space may be assigned as an augmented avatar space (i.e. whether the portion is sufficiently sized to occupy an avatar space), the method may compare the portion of the unoccupied space to pre-set criteria for the augmented avatar space.

Optionally, the AR environment may comprise one or more pre-assigned augmented avatar spaces. For example, the method may comprise analysing the AR environment to determine a pre-selected number of suitable augmented avatar spaces that may be created within the AR environment having a common focal point with the physical avatar spaces.

Optionally, when the number of virtual avatars is greater than the number of augmented avatar spaces (i.e. the number of virtual avatars needing a space exceeds the number of available physical avatar spaces and augmented avatar spaces), the method further comprises replacing the augmented reality environment with a virtual reality environment, wherein the virtual reality environment comprises a virtual avatar space for each virtual avatar.

Optionally, each physical avatar space and/or each augmented avatar space (and any associated virtual items of furniture) that were present in the augmented reality environment are recreated as virtual avatar spaces in the virtual environment. This provides a minimum level of disruption to the users who have already been assigned an avatar space (e.g. physical or augmented) and thus improves the user experience when allowing new avatars to join the mixed-reality environment.

Optionally, when the number of virtual avatars requiring an avatar space is greater than the number of available physical avatar spaces, the method further comprises replacing the augmented reality environment with a virtual reality environment, wherein the virtual reality environment comprises a virtual avatar space for each virtual avatar.

In other words, the method steps involving the use of augmented avatar spaces may be bypassed. This, for example, may be preferred when the number of users queuing to enter the mixed-reality environment is known and it is determined that the number of avatar spaces required will require a virtual environment. As such, by bypassing the method steps associated with the augmented avatar spaces, an improved allocation of computing resources may be provided.

Optionally, each physical avatar space is recreated as a respective virtual avatar space in the virtual environment.

Optionally, the virtual reality environment is based on the augmented reality environment with an augmentation function applied.

Optionally, the augmentation function comprises one or more of: enlarging the augmented reality environment; removing one or more physical objects from the augmented reality environment that are not associated with a physical avatar space or an augmented avatar space; and/or repositioning one or more physical objects with respect to their corresponding physical location in the real-world environment.

Optionally, the augmentation function comprises replicating (e.g. creating a virtual representation of) an object from the augmented reality environment at a new position in the virtual reality environment, such that the virtual reality environment comprises a plurality of the same physical object.

Optionally, the users (e.g. through the perspective of their avatars) may see one, some or all of the plurality of the same physical object.

Optionally, each virtual avatar assigned to a given (physical, augmented or virtual) avatar space views the augmented reality environment or the virtual reality environment with a unique perspective view. As such, when the virtual reality environment comprises a plurality of the same physical object, each unique perspective view may comprise only one of the physical objects, such that each virtual avatar views a unique scene relative to the virtual avatars position within the virtual reality environment. This enhances the user experience by ensuring each avatar has an optimum view.

### Brief Description of Drawings

Embodiments of this disclosure will be described hereinafter, by way of example only, with reference to the accompanying drawings in which like reference signs relate to like elements and in which:
Figure 1 shows a flow diagram of a method according to an embodiment of the disclosure;
Figure 2 shows a flow diagram of a method according to an embodiment of the disclosure;
Figure 3A-3F schematically represents different stages according to an embodiment of the disclosure;
Figure 4 shows a flow diagram of a method according to an embodiment of the disclosure;
Figure 5 shows an example system arranged to implement the method of the present disclosure; and
Figure 6 shows a block diagram of one example implementation of a computing device.

### Detailed Description

The following detailed description is merely illustrative in nature and is not intended to limit the embodiments of the subject matter or the application and uses of such embodiments. As used herein, the words "exemplary" and "example" mean "serving as an example, instance, or illustration." Any implementation described herein as exemplary, or an example, is not necessarily to be construed as preferred or advantageous over other implementations. Furthermore, there is no intention to be bound by any expressed or implied theory presented in the preceding technical field, background, or the following detailed description.

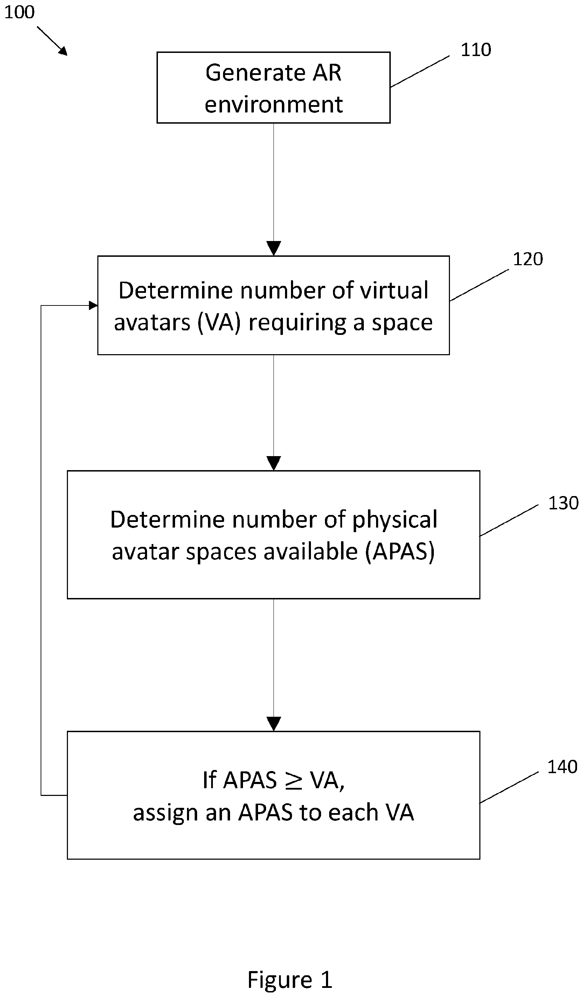

Figure 1 shows a flow diagram of a computer implemented method 100 in accordance with an embodiment of the present disclosure.

In a first step 110, an augmented reality (AR) environment is generated based on input data defining a real-world environment. For example, the input data may be data received at a sensor representative of the real-world environment. For example, the real-world environment may include within it a camera or sensor unit configured to scan the real-world environment. The method may thus construct an AR environment based on the scanned image.

Optionally, scanning the local environment further comprises determining planes (e.g. physical surfaces, e.g. surfaces not part of a physical space such as a tv). The planes may include areas of the environment which will become sitting areas (e.g. physical surfaces as part of a physical space). Determining planes is optionally performed using simultaneous location and mapping, SLAM. In some embodiments, scanning may be performed through a lens (e.g. camera) on a headset of a user in the environment. Optionally, the input data may be measured by a sensor (e.g. a camera) in a headset worn by a user or included within the physical environment, and is then sent to a central processor for processing to determine the planes/surfaces to be represented in the AR environment.

Scanning comprises traversing surfaces with a beam (e.g. an electromagnetic beam) to detect features in the range of the beam or scanning the field of view of a camera from which features can be extracted. The features preferably relate to articles of the environment such as objects including walls, floors, ceilings, tables, chairs, etc. Scanning provides the system with physical information of the local environment of a user to determine one or more locations to display a virtual image to be part of the mixed-reality experience.

Optionally, generating the AR environment comprises a spawning process. A spawning process in computing refers to a function that loads and executes a new child process. The current process may execute concurrently with the child process or may wait for the child process to terminate before continuing. The child process in the context of the present disclosure may include generating an image (e.g. the AR environment) to be displayed.

In a second step 120, the method 100 comprises determining the number of virtual avatars (VA) requiring an avatar space within the augmented reality environment. For example, the AR environment may be empty such that all virtual avatars entering, or requesting entry to, the AR environment need to be assigned an avatar space. Alternatively, the AR environment may be an "open house" environment in which avatars may enter and leave the AR environment such that the AR environment is partially and transiently occupied. As such, the method 100 determines the number of virtual avatars that have entered, or have requested entry to, the AR environment that do not already have an avatar space assigned to them.

In a third step 130, the method 100 comprises determining a number of available physical avatar spaces (APAS) (i.e. spaces corresponding to a physical space within the real-world environment) within the AR environment. For example, this step may comprise receiving an image of the real-world environment and determining the presence of one or more physical surfaces therein. These physical surfaces may then be used to assign a number of physical avatar spaces encompassing the physical surfaces identified.

The physical space may be empty such that the physical surface is part of the floor (e.g. ground) of the AR environment on which a user may stand. The physical space may comprise part or all of an item of furniture on which a user may sit. For example, a physical space may include a chair that could be sat on by a user in the real-world environment. Said physical chair may then be represented virtually in the corresponding augmented reality environment such that the physical space comprising the chair in the real-world has an associated physical avatar space comprising the virtual chair in the AR environment. Preferably, a physical space is defined as a space in which a single user could occupy. As such, it corresponds that a single avatar can occupy a physical avatar space. As such, items of furniture (e.g. sofas) may comprise a plurality of physical spaces. It will further be appreciated that a physical chair includes a physical surface (i.e. the seat) on which a user can sit. Other physical surfaces could be the seat of a stool, a sofa cushion, a table top, a step, part of the floor and so on.

For example, portions of the floor positioned directly behind items of furniture (such that a user, when sat therein, would have an obstructed view of the focal point of the AR environment) would be discounted as a physical surface that could receive a user sat down. Optionally, a physical surface is pre-determined to only correspond to surfaces that form part of an item of furniture on which a user can sit. In other words, a physical space may be pre-determined to not correspond to part of the floor of the augmented reality environment and thus a physical avatar space does not correspond to a place where an avatar can sit or stand on the floor.

If the AR environment is unoccupied (i.e. doesn't include any avatars), all of the determined physical avatar spaces corresponding to a physical space in the real-world are available. Alternatively, if the AR environment already has one or more avatar occupants, the available physical spaces may correspond to the physical avatar spaces that have not already been assigned to an avatar. As such, the step of determining the number of available physical avatar spaces may include determining how many of the determined physical avatar spaces are already occupied. This could be determined by receiving a new image (or analysing a previously received image) to identify a user occupancy within the real-world environment. Alternatively, the physical avatar spaces determined may be compared to a roster of spaces that have already been assigned to an avatar.

In a fourth step 140, the method 100 comprises comparing the number of virtual avatars (VA) requiring an avatar space to the number of available physical avatar spaces (APAS). When the number of virtual avatars requiring an avatar space is less than or equal to the number of available physical avatar spaces, at step 140 each virtual avatar (VA) is assigned one of the available physical avatar spaces (APAS). Thus, the physical avatar spaces can be sequentially filled as avatars enter the AR environment. The method then returns to step 120 every time a new virtual avatar or group of virtual avatars enters the augmented reality environment.

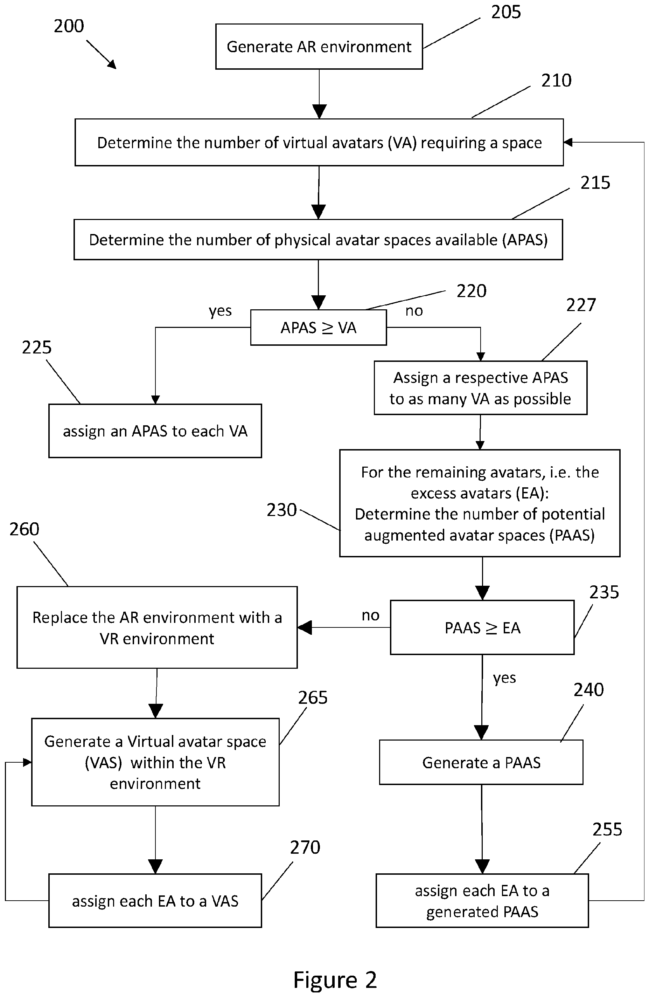

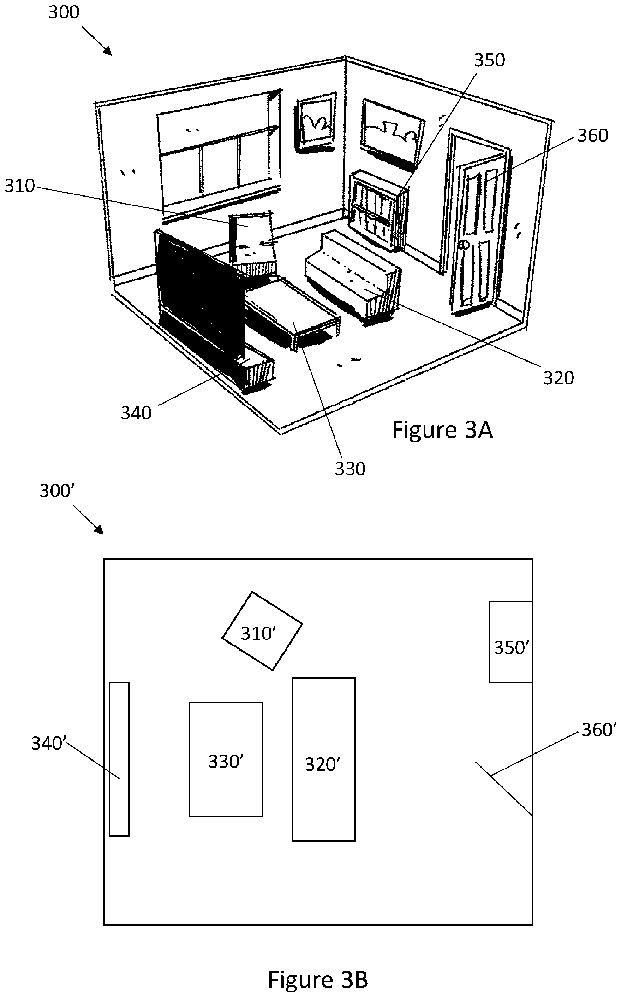

Figure 2 shows a flow diagram of a computer implemented method 200 in accordance with an embodiment of this disclosure. Figures 3A-3F schematically depict various parts of the method 200.

As with method 100, the first step 205 of method 200 is to generate an augmented reality environment. As shown in Figure 3A, the AR environment 300 may represent a living room comprising a chair 310, a sofa 320, a coffee table 330, a TV/TV unit 340, a bookcase 350 and an entryway with a door 360. Figure 3B shows a plan view of same AR environment 300' (thus all references in Figure 3A are given an ` in Figure 3B to indicate they are depicted in plan).

In a second step 210, the method 200 determines the number of virtual avatars (VA) requiring an avatar space within the augmented reality environment 300, 300'. As shown in Figure 3A and 3B, the AR environment 300, 300' is unoccupied and thus any virtual avatar that request entry to the AR environment will need to be assigned an avatar space within the AR environment 300, 300'.

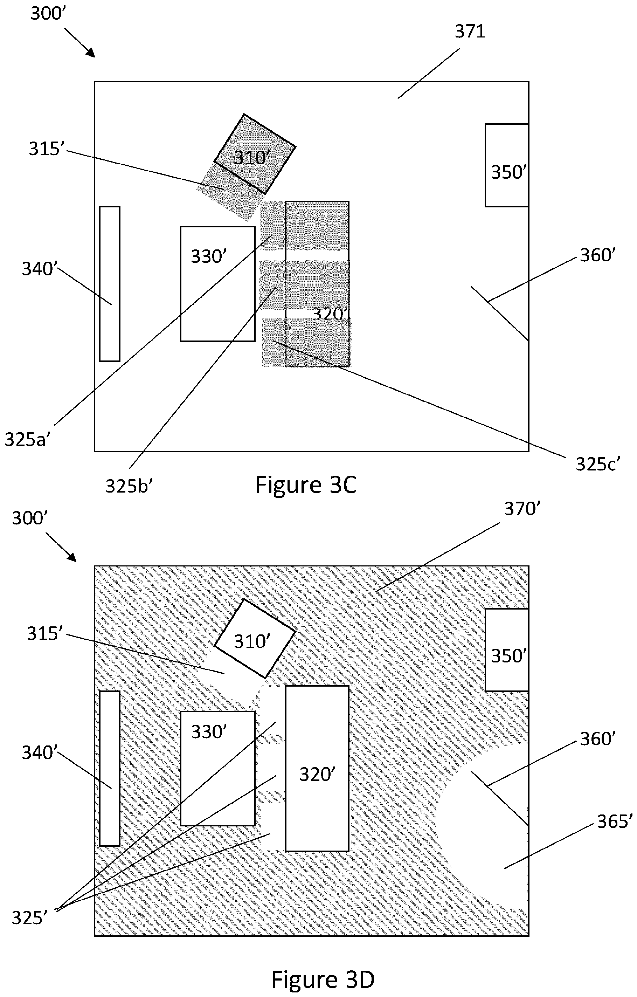

In a third step 215, the method 200 determines a number of available physical avatar spaces (APAS) within the AR environment 300, 300'. As shown in Figure 3C, the AR environment 300, 300' includes both a chair 310, 310' and a sofa 320, 320' which comprise physical surfaces on which a user may sit. As such, physical spaces, and their corresponding physical avatar spaces 315', 325' may be defined to include or encompass these physical surfaces. Furthermore, the sofa 320, 320' may accommodate a plurality of users. In this example, the sofa 320, 320' is determined to accommodate three users in the real-world and thus the sofa 320,320' comprises three physical surfaces corresponding to three discrete physical avatar spaces 325a', 325b', 325c'.

To determine the number of augmented avatar spaces, the method must first determine the "free" or unoccupied space within the real-world (or corresponding AR) environment in which an augmented avatar space could be located. It will be appreciated that the unoccupied space is equal to the total space (e.g. area, e.g. volume) of the real-world environment minus the occupied space. In the real-world environment, the occupied space may comprise the identified physical spaces, items of furniture that are not suitable for a user to sit on (e.g. a side board, a table, a wardrobe, a bookcase, a tv unit, a tv, etc.) and spaces that are unavailable for occupation (e.g. a space that is temporarily occupied by a door when it opens or closes). Similarly, in the AR environment, the occupied space may comprise the corresponding virtual counterparts, e.g. the physical avatar spaces, virtual items of furniture, and virtual areas that are unavailable for occupation (e.g. temporarily occupied by opening a virtual door). The unoccupied space may be one continuous space or comprise a plurality of discreate unoccupied spaces.

In this embodiment, the table 330', the TV/TV unit 340' and the bookcase 350' are not defined as physical avatar spaces, as these are not associated with surfaces that would be (conventionally) sat on by a user. Moreover, the table 330 may be required as an interactive surface in the AR environment, such as for receiving virtual objects, playing a virtual card came, etc and as such cannot be occupied by one or more avatars. This criterion may be specified in the input data, which may include game data.

In a fourth step 220, the method 200 compares the number of virtual avatars (VA) requiring an avatar space to the number of available physical avatar spaces (APAS). When the number of available physical spaces is greater than or equal to the number of virtual avatars, each virtual avatar (VA) is assigned 225 one of the available physical avatar spaces (APAS) (as in the method shown in Figure 1). However, when the number of available physical spaces is less than the number of virtual avatars requiring a space, as many avatars as possible are assigned to the available virtual avatar spaces in step 227 before the method proceeds to step 230. In step 230, as described in more detail below, one or more augmented avatar spaces may be created to accommodate the excess virtual avatar(s) (EA).

In some embodiments, the AR environment may be pre-set such that a physical avatar space is only assigned to parts of the AR environment comprising a physical surface forming part of an item of furniture in the real-world. As such, the physical avatar spaces shown in Figures 3C only includes the chair 310' or the sofa 320'. As such, there are no physical spaces assigned to parts of the floor 371 where a user could viably stand. In other embodiments, physical spaces may be assigned to parts of the floor 371 where a user could viably stand.

In step 230, the method 200 determines the number of potential augmented avatar spaces (PAAS) available within the AR environment 300, 300'. To do this, the unoccupied space inside which an avatar space may be placed is identified. As shown in Figure 3D, the unoccupied space 370' is the space which does not overlap with any of the following: a physical avatar space 315', 325'; a space occupied by an item of furniture in the room 330', 340', 350'; or a space that is transiently occupied 365', e.g. by opening or closing a door. In other words, the unoccupied space 370' is the space in which a further chair could theoretically be placed into the real-world environment to accommodate a further user.

Once the unoccupied space 370' has been determined, or identified, as part of step 230, the method 200 determines whether one or more augmented avatar spaces may be positioned within the unoccupied space 370'. For example, the unoccupied space may be compared to a pre-set criteria which comprise an assessment of whether an augmented avatar space assigned to the unoccupied space would provide an avatar within said space a partially or fully obstructed view of a focal point of the AR environment (e.g. a game device, e.g. a tv, e.g. an activity). For example, if a resulting augmented avatar space assigned to the unoccupied space is positioned directly behind another physical avatar space or augmented avatar space such that an avatar assigned to the augmented avatar space is unable to see the focal point of the AR environment, the method may either discount the unoccupied space as being suitable for an augmented avatar space, or, alternatively, ensure that the unoccupied space is assigned an augmented avatar space with a raised view (e.g. comprising a platform or a high chair/stool, e.g. a standing augmented avatar space).

The unoccupied space should be large enough to contain one or more augmented reality spaces. If it is not, no potential augmented avatar spaces can be assigned and the method moves to step 260.

Optionally, each augmented avatar space is sufficiently sized to receive a virtual item of furniture on which the virtual avatar may sit. Alternatively, the augmented avatar space may be a standing space for the virtual avatar to be assigned. Each augmented avatar space may therefore have a different size, i.e. not all of the augmented avatar spaces may be sized to encompass the same virtual items of furniture. The method may thus comprise analysing the unoccupied spaces to determine if there are any items of furniture (for which the dimensions are stored within the processors memory) that can be located within the unoccupied spaces.

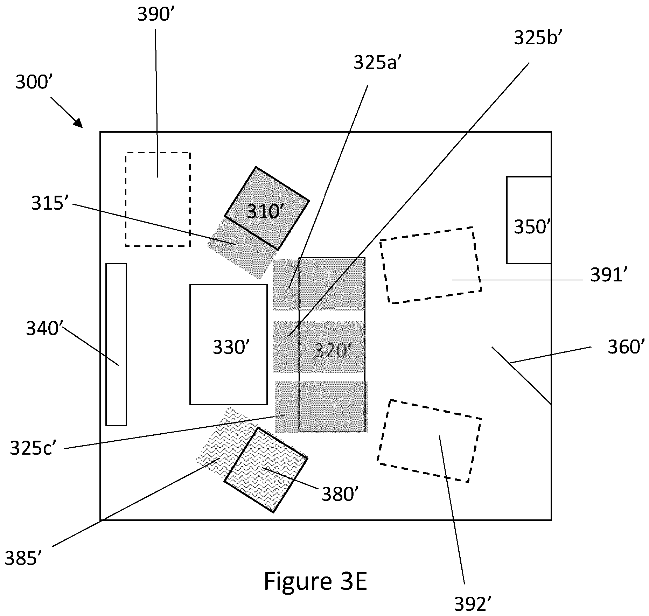

Thus, when the unoccupied space 370' is large enough, an augmented avatar space 385' can be created (step 240) including generating a virtual item of furniture, such as a chair 380' for the avatar to be received on, as shown in Figure 3E. The avatar(s) requiring an avatar space can then be assigned, in step 255, to the generated augmented avatar spaces in step 240. Once the avatar(s) have been assigned a generated augmented avatar space, the method then returns to step 210 every time a new virtual avatar or group of virtual avatars enters the augmented reality environment.

As such, in the example shown in Figure 3E, a total of four avatars may be accommodated within the AR environment, three of which are assigned a physical avatar space, and the fourth of which is assigned the augmented avatar space created specifically to accommodate it.

As shown in Figure 3E, there are a number of other portions 390', 391', 392' of the unoccupied space 370' that could potentially be assigned an augmented avatar space (not all of which are shown). However, in some embodiments, a pre-determined criteria for augmented avatar spaces may be applied such that an augmented avatar space cannot be assigned if the resulting space would have a partially or fully obstructed view of the determined focal point of the AR environment, which, in this case, is the TV 340, 340'. As such, a potential augmented avatar space may be discounted if it has a side on view (e.g. potential space 390') or is positioned directly behind other physical or augmented avatar spaces (e.g. potential spaces 391', 392').

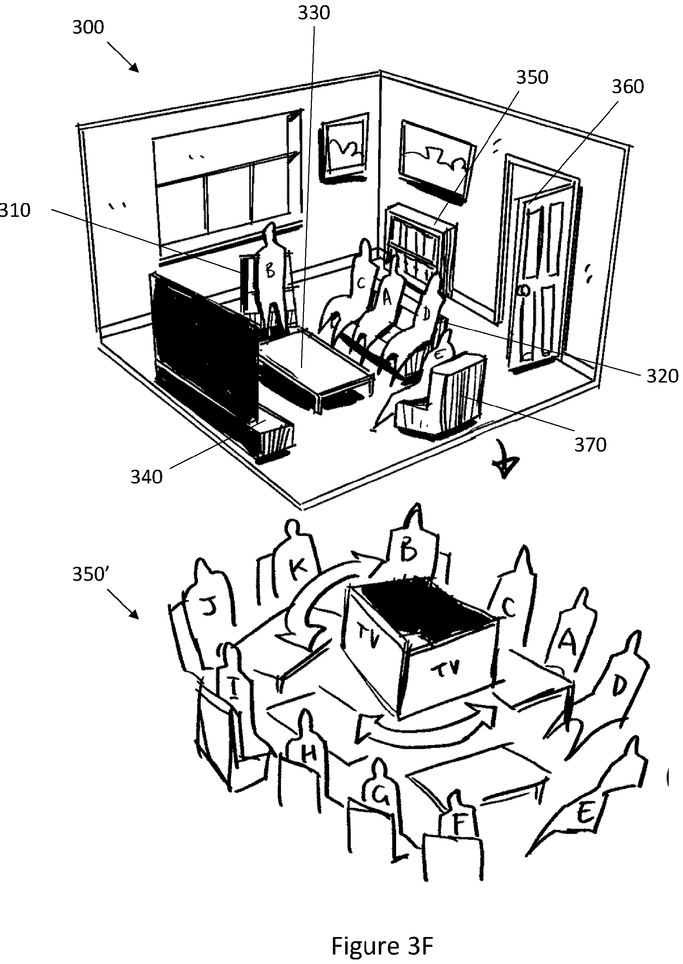

When a further avatar enters the AR environment 300', and it is determined that all of the potential augmented avatar spaces 385' have been filled in step 235, the method replaces the AR environment with a virtual reality (VR) environment 350' in step 260 (as shown in Figure 3F). Every physical avatar space 315', 325a', 325b', 325c' and augmented avatar space 385' that were present in the AR environment 300' is re-created in the VR environment 305' in step 265. Step 265 further includes generating new virtual avatar spaces within the VR environment 305' to accommodate the virtual avatars in excess of the number of physical and augmented avatar spaces. In step 270, the avatars are thus assigned to the created virtual avatar spaces.

As shown in Figure 3F, the VR environment 305' can be distorted (e.g. enlarged, skewed or scaled) with respect to the AR environment 300'. Furthermore, the VR environment 305' may duplicate a number of items (such as the TV 340 or table 330) with respect to the real-world environment 300 and corresponding AR environment 300'. However, each avatar A-K may only see one of each of the plurality of items from their view, i.e. one TV and one table. As such, the integrity of the user experience maintained.

For example, the virtual reality environment may arrange a plurality of virtual avatar spaces in a circle to accommodate the number of avatars. However, some of the avatars within the circle may have a poorer view (e.g. of the game being played, e.g. of the movie being watched on a virtual TV) than others. As such, the virtual environment may replicate the focus of the AR/VR environment (e.g. a TV) and arrange the replicated plurality of items in a circle corresponding to the circle of the avatars. As such, each avatar now has an optimal view of one of the items (e.g. the TV) and thus an improved user experience.

After each excess avatar has been assigned a virtual avatar space in step 270, the method then returns to step 265 every time a new virtual avatar or group of virtual avatars enters the augmented reality environment.

To summarise, the system and method of the present disclosure may provide physical avatar spaces, augmented avatar spaces and virtual avatar spaces. As explained above, a physical avatar space has a corresponding physical surface in the real-world for receiving a user thereon. An augmented avatar space corresponds to a physical space (e.g. empty space) in the real-world environment that does not have such a physical surface, but has a sufficient space for receiving such a physical surface. When all physical avatar spaces have been occupied or allocated, the method may identify and allocate one or more augmented avatar spaces to avatars. The method may include generating a virtual item of furniture or a virtual surface in the augmented avatar space, for receiving the avatar thereon. Optionally, when all augmented avatar spaces have also been occupied or allocated, the AR environment may be replaced by a virtual environment that is configured to receive all the avatars therein. Each avatar is then received in a virtual avatar space.

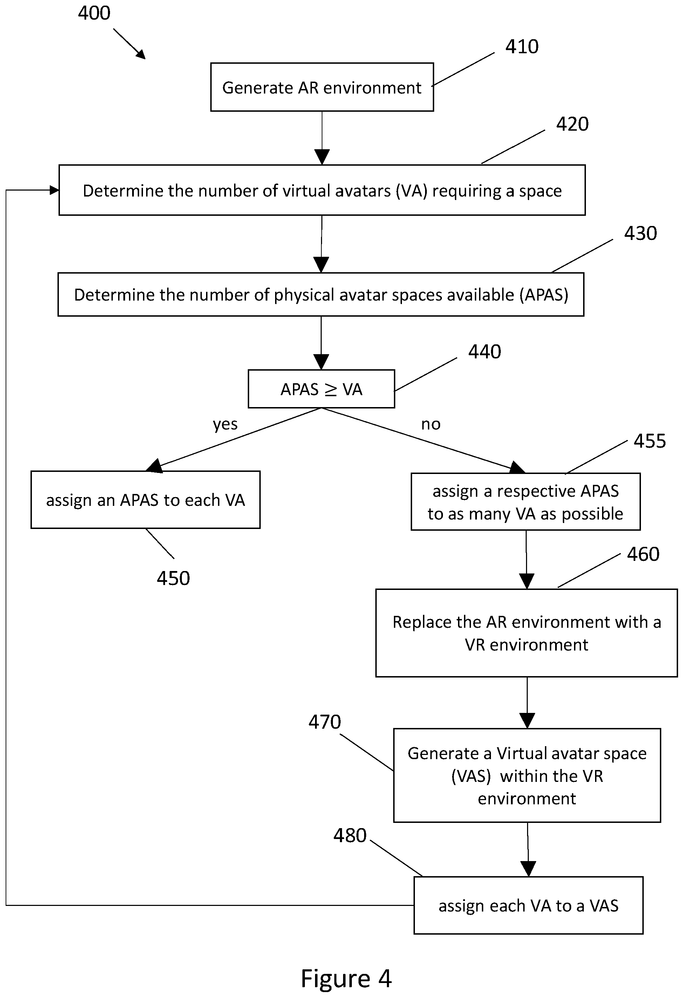

Figure 4 shows a flow diagram of a computer implemented method 400 in accordance with an embodiment of this disclosure. Method 400 has a plurality of steps in common with method 200. As such, Figures 3A, 3B, 3D and 3F may equally apply to method 400.

The primary difference between method 400 and method 200 is that, when it is determined that the number of virtual avatars requiring a space exceeds the number of available physical avatar spaces (step 220 and 440), and after all of the available physical avatar spaces have been filled (step 227 and 455), method 400 bypasses creating augmented avatar spaces and instead replaces the AR environment with a VR environment. As such, method steps 205, 210, 215, 220, 225, 260, 265, 270 in method 200 respectively correspond to method steps 410, 420, 430, 440, 450, 460, 470 and 480 in method 400. As such, the above discussion in relation to method 200 with regards to these steps equally applies to said steps in method 400.

Accordingly, in step 470 and/or step 480, each physical avatar space that was present in the AR environment 300' may be re-created in the VR environment 305'. Thus, if a virtual avatar was allocated a physical avatar space in the AR environment prior to the creation of the VR environment, said virtual avatar may appear to be in the same space in the VR environment.

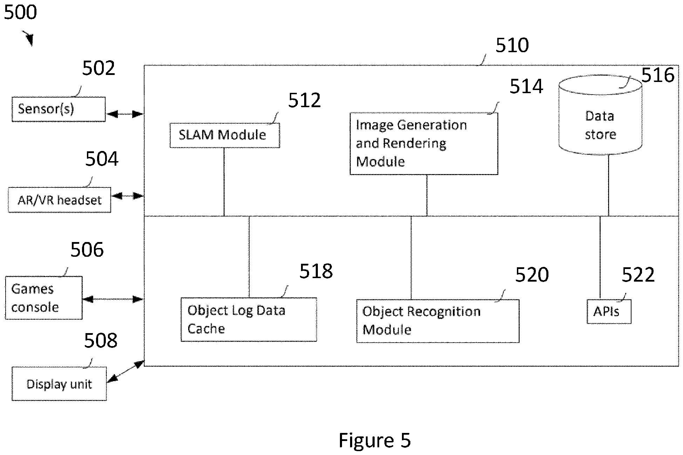

Figure 5 illustrates a schematic diagram of an example system 500 which can implement the present disclosure. The system 500 comprises modules suitable for mapping and classifying the local environment and rendering an image to be displayed to a user. The system comprises sensor(s) 502, an AR/VR headset 504, a games console 506, a display unit 508 and a processing unit 510. In this embodiment, the processing unit 510 comprises a SLAM module 512, an image generation and rendering module 514, a data store 516 (e.g. a memory), an object log data cache 518, an object recognition module 520 and an API module 522.

Sensor(s) 502 may comprise one or more of the biometric sensors and/or sensors used to create the AR environment. For example, the sensors may comprise a camera, an electrode, an accelerometer, a gyroscope, a global positioning sensor, a light sensor and/or a depth sensor, each configured to capture data from the environment. In some examples, the sensor(s) 502 may be part of the VR/AR headset 504 worn by a user. The AR/VR headset 504 may also include the display unit 508 in some examples.

The sensor(s) 502, AR/VR headset 504, games console 506 and display unit 508 are in communication with the processing unit 510. The processing unit 510 may be located in the cloud or be a part of the games console 506 or other computing device. Any suitable communications network can be used to transmit data between the sensor(s) 502, AR/VR headset 504, games console 506, display unit 508 and processing unit 510.

In this embodiment, the processing unit 510 comprises a SLAM module 512. The SLAM module 512 provides an estimate of the surrounding environment and comprises an internal front end which performs the method 100 described in Figure 1 and/or the feature extraction required to generate the AR environment (e.g. with data received from sensor(s) 502).

The SLAM module 512 further comprises an internal back end which uses the data output from the internal front end to determine the relationships between different frames, localization of a camera, geometrically reconstructing the surrounding environment as captured by the sensor(s) 502. An internal output module provides output data indicative of the surrounding environment, including data for the physical objects in the surrounding environment, the locations of those objects and landmark data corresponding to landmarks on those objects. The SLAM module 512 may feed directly into the object recognition module 520, which recognises planes including surfaces relating to, for example, tabletops, floors, walls etc which can be used to construct the augmented reality environment. Data concerning the objects which are identified in the environment may be stored at the data store 516 and/or object log data cache 518, for example their location or type of object.

The image generation and rendering module 514 may create image content to be displayed at the AR/VR headset 504 and/or display unit 508 to be seen by a user. This can be based on data received from the sensor(s) 502 and/or one or more outputs from the SLAM module 512 and/or object recognition module 520 in response to detecting a plane or object in an environment (e.g. a physical surface). Image data may be created dynamically (or statically) at the image generation and rendering module 514 and provided as an image stream (or image) to a display output of the system. The image provides the virtual-part of the mixed-reality environment whilst the user sees the real-world part of the environment through one or more lenses of the AR/VR headset.

The API module 522 may create or run one or more applications to be presented on a display device such as display unit 508.

The system 500 is implemented using any suitable processing resource, which may be hardware and/or software implemented.

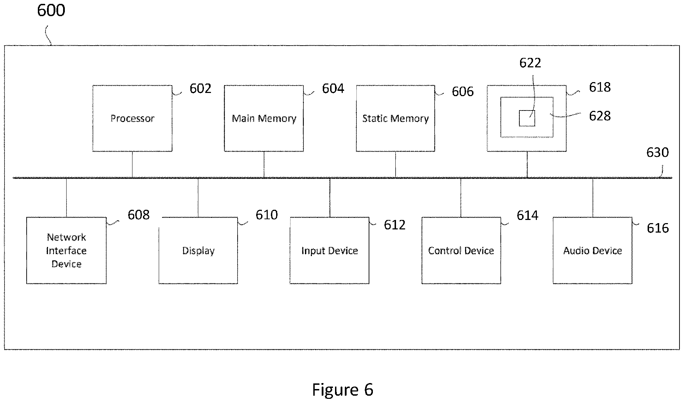

Figure 6 shows a block diagram of one example implementation of a computing device 600 that can be used for implementing the steps indicated in Figures 1, 2 and 4. Optionally, the computing device may be, or may form part of, an extended-reality display device, such as an AR or VR headset.

The computing device is associated with executable instructions for causing the computing device to perform any one or more of the methodologies discussed herein. The computing device 600 may operate in the capacity of the data model or one or more computing resources for implementing the data model for carrying out the methods of the present disclosure. In alternative implementations, the computing device 600 may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term "computing device" shall also be taken to include any collection of machines (e.g., computers) that individually or jointly execute a set (or multiple sets) of instructions to perform any one or more of the methodologies discussed herein.

The example computing device 600 includes a processing device 602, a main memory 604 (e.g., read-only memory (ROM), flash memory, dynamic random-access memory (DRAM) such as synchronous DRAM (SDRAM) or Rambus DRAM (RDRAM), etc.), a static memory 606 (e.g., flash memory, static random-access memory (SRAM), etc.), and a secondary memory (e.g., a data storage device 618), which communicate with each other via a bus 630.

Processing device 602 represents one or more general-purpose processors such as a microprocessor, central processing unit, or the like. More particularly, the processing device 602 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processing device 602 may also be one or more special-purpose processing devices such as an application specific integrated circuit (ASIC), a field programmable gate array (FPGA), a digital signal processor (DSP), network processor, or the like. Processing device 602 is configured to execute the processing logic (instructions 622) for performing the operations and steps discussed herein.

The computing device 600 may further include a network interface device 608. The computing device 600 also may include a video display unit 610 (e.g., a light emitting diode (LED) display, a liquid crystal display (LCD) or a cathode ray tube (CRT)), an alphanumeric input device 612 (e.g., a keyboard or touchscreen), a cursor control device 614 (e.g., a mouse or touchscreen), and an audio device 616 (e.g., a speaker).

The data storage device 618 may include one or more machine-readable storage media (or more specifically one or more non-transitory computer-readable storage media) 628 on which is stored one or more sets of instructions 622 embodying any one or more of the methodologies or functions described herein. The instructions 622 may also reside, completely or at least partially, within the main memory 604 and/or within the processing device 602 during execution thereof by the computer system 600, the main memory 604 and the processing device 602 also constituting computer-readable storage media.

The various methods described above may be implemented by a computer program. The computer program may include computer code arranged to instruct a computer to perform the functions of one or more of the various methods described above. The computer program and/or the code for performing such methods may be provided to an apparatus, such as a computer, on one or more computer readable media or, more generally, a computer program product. The computer readable media may be transitory or non-transitory. The one or more computer readable media could be, for example, an electronic, magnetic, optical, electromagnetic, infrared, or semiconductor system, or a propagation medium for data transmission, for example for downloading the code over the Internet. Alternatively, the one or more computer readable media could take the form of one or more physical computer readable media such as semiconductor or solid-state memory, magnetic tape, a removable computer diskette, a random-access memory (RAM), a read-only memory (ROM), a rigid magnetic disc, and an optical disk, such as a CD-ROM, CD-R/W or DVD.

In an implementation, the modules, components and other features described herein can be implemented as discrete components or integrated in the functionality of hardware components such as ASICS, FPGAs, DSPs or similar devices.

A "hardware component" is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase "hardware component" should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

Unless specifically stated otherwise, as apparent from the following discussion, it is appreciated that throughout the description, discussions utilising terms such as "providing", "calculating", "computing," "identifying", "detecting ", "establishing" , "training", "determining", "storing", "generating" ,"checking", "obtaining" or the like, refer to the actions and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

Further aspects or embodiments of the present disclosure are defined in the following numbered clauses:
1. A computer-implemented method comprising: generating an augmented reality environment based on input data defining a real-world environment;
   determining a number of virtual avatars requiring an avatar space within the augmented reality environment; determining a number of physical avatar spaces that are available for occupation by a virtual avatar within the augmented reality environment, wherein each physical avatar space corresponds to a physical space comprising a physical surface for receiving a single user in the real-world environment; comparing the number of virtual avatars requiring an avatar space within the augmented reality environment to the number of available physical avatar spaces; and when the number of virtual avatars requiring an avatar space within the augmented reality environment is less than or equal to the number of available physical avatar spaces, assigning a different available physical avatar space to each virtual avatar.
2. The computer-implemented method of clause 1, wherein the method further comprises: receiving an image of the real-world environment; processing the image to identify one or more physical surfaces; and assigning a physical space to encompass each identified physical surface; and assigning a physical avatar space within the augmented reality environment to correspond to the physical space in the real-world environment.
3. The computer-implemented method of clause 1 or clause 2, wherein the step of determining the number of available physical avatar spaces further comprises: determining if a physical space in the real-world environment is assigned to or occupied by a user; determining if a physical avatar space corresponding to the physical space is assigned to or occupied by a virtual avatar in the augmented reality environment; and when the physical space is not assigned to or occupied by a user, and the physical avatar space is not assigned to or occupied by a virtual avatar, designating the physical avatar space as an available physical avatar space.
4. The computer-implemented method of any preceding clause, wherein each physical surface is part of an item of furniture located within the real-world environment; and wherein each physical space defines a volume that encompasses:
   the physical surface;
   all or part of a given item of furniture comprising the physical surface; and/or
   a space beyond the physical surface that would be occupied by a user when the user is received on the physical surface.
5. The computer implemented method of any preceding clause, wherein the method further comprises: determining if a physical space in the real-world environment is occupied by a user in the real-world environment; and assigning the user's virtual avatar to the physical avatar space in the augmented reality environment corresponding to the physical space occupied by the user in the real-world environment.
6. The computer implemented method of any preceding clause, wherein the method further comprises: configuring or arranging each virtual avatar to sit or stand within the physical avatar space to which they have been assigned.
7. The computer-implemented method of any preceding clause, wherein when the number of virtual avatars requiring an avatar space is greater than the number of available physical avatar spaces, the method further comprises: determining a number of augmented avatar spaces within the augmented reality environment, wherein each augmented avatar space is sized to receive a single virtual avatar and corresponds to a physical space within the real-world environment that does not include a physical surface suitable for receiving a user; and when the number of virtual avatars is greater than the number of available physical avatar spaces and less than or equal to the number of augmented avatar spaces: assigning a respective virtual avatar to each augmented avatar space; and updating the augmented reality environment to create, in each augmented avatar space, a surface for receiving the virtual avatar.
8. The computer-implemented method of clause 7, wherein each augmented avatar space does not overlap with a physical avatar space; and/or wherein each augmented avatar space comprises a volume suitable for locating a virtual item of furniture comprising the surface for receiving a single virtual avatar.
9. The computer-implemented method of clause 7 or clause 8, wherein the step of determining the number of augmented avatar spaces further comprises: identifying one or more unoccupied spaces within the augmented reality environment; determining if each of the one or more unoccupied spaces can encompass one or more augmented avatar spaces; and when it is determined that an unoccupied space can encompass one or more augmented avatar spaces, defining a portion of the unoccupied space as an augmented avatar space.
10. The computer-implemented method of any one of clauses 7 to 9, wherein the step of updating the augmented reality environment to create, in each augmented avatar space, a surface for receiving the virtual avatar, comprises: generating a virtual item of furniture comprising the surface in the augmented avatar space.
11. The computer-implemented method of any one of clauses 7 to 10, wherein when the number of virtual avatars in excess of the number of available physical avatar spaces is greater than the number of augmented avatar spaces, the method further comprises:
   replacing the augmented reality environment with a virtual reality environment; wherein the virtual reality environment comprises a virtual avatar space for each virtual avatar.
12. The computer-implemented method of clause 11, wherein each physical avatar space and each augmented avatar space of the augmented reality environment is recreated as a respective virtual avatar space in the virtual environment.
13. The computer-implemented method of any one of clauses 1 to 6, wherein when the number of virtual avatars requiring an avatar space is greater than the number of available physical avatar spaces, the method further comprises: replacing the augmented reality environment with a virtual reality environment; wherein the virtual reality environment comprises a virtual avatar space for each virtual avatar.
14. The computer-implemented method of clause 13, wherein each physical avatar space is recreated as a respective virtual avatar space in the virtual environment.
15. The computer-implemented method of any one of clauses 11 to 14, wherein the virtual reality environment is based on the augmented reality environment with an augmentation function applied.
16. The computer-implemented method of clause 15, wherein the augmentation function comprises one or more of: enlarging the augmented reality environment; removing one or more physical objects from the augmented reality environment that are not associated with a physical avatar space or an augmented avatar space; repositioning one or more physical objects with respect to their corresponding physical location in the real-world environment.
17. The computer-implemented method of clause 15 or clause 16, wherein the augmentation function comprises: replicating a physical object from the augmented reality environment at a new position in the virtual reality environment, such that the virtual reality environment comprises a plurality of the same physical object.
18. The computer-implemented method of any preceding clause, wherein each virtual avatar assigned to a given avatar space views the augmented reality environment or the virtual reality environment with a unique perspective view.
19. The computer-implemented method of clause 18 as it depends on clause 17, wherein, when the virtual reality environment comprises a plurality of the same physical object, each unique perspective view comprises only one of the physical objects such that each virtual avatar views a unique scene relative to the virtual avatars position within the virtual reality environment.
20. The computer-implemented method of any preceding clause, wherein the input data may comprises: an image or scan of the user's real-world physical environment, such that the augmented reality environment is generated to represent the user's physical environment.
21. The computer-implemented method of any preceding clause, wherein the input data comprises: input video game data, such that the augmented reality environment is generated to facilitate a video game to be played.
22. A computing device comprising:
   a processor; and
   memory, the memory communicatively coupled to the processor, the memory comprising instructions operable, when executed by the processor, to cause the processor to carry out the method of any preceding clause.
23. A computer program comprising instructions which when executed in a computerized system comprising at least one processor, cause the at least one processor to carry out the method of any one of clauses 1 to 21.
24. A non-transitory computer-readable medium comprising instructions which when executed in a computerized system comprising at least one processor, cause the at least one processor to carry out the method of any one of clauses 1 to 21.

It is to be understood that the above description is intended to be illustrative, and not restrictive. Many other implementations will be apparent to those of skill in the art upon reading and understanding the above description. Although the disclosure has been described with reference to specific example implementations, it will be recognised that the disclosure is not limited to the implementations described but can be practiced with modification and alteration within the scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A computer-implemented method comprising:
generating an augmented reality environment based on input data defining a real-world environment;
determining a number of virtual avatars requiring an avatar space within the augmented reality environment;
determining a number of physical avatar spaces that are available for occupation by a virtual avatar within the augmented reality environment, wherein each physical avatar space corresponds to a physical space comprising a physical surface for receiving a single user in the real-world environment;
comparing the number of virtual avatars requiring an avatar space within the augmented reality environment to the number of available physical avatar spaces; and
when the number of virtual avatars requiring an avatar space within the augmented reality environment is less than or equal to the number of available physical avatar spaces, assigning a different available physical avatar space to each virtual avatar.

2. The computer-implemented method of claim 1, wherein the method further comprises:
receiving an image of the real-world environment;
processing the image to identify one or more physical surfaces;
assigning a physical space to encompass each identified physical surface; and
assigning a physical avatar space within the augmented reality environment to correspond to the physical space in the real-world environment.

3. The computer-implemented method of claim 1 or claim 2, wherein the step of determining the number of available physical avatar spaces further comprises:
determining if a physical space in the real-world environment is assigned to or occupied by a user;
determining if a physical avatar space corresponding to the physical space is assigned to or occupied by a virtual avatar in the augmented reality environment; and
when the physical space is not assigned to or occupied by a user, and the physical avatar space is not assigned to or occupied by a virtual avatar, designating the physical avatar space as an available physical avatar space.

4. The computer implemented method of any preceding claim, wherein the method further comprises:
determining if a physical space in the real-world environment is occupied by a user in the real-world environment; and
assigning the user's virtual avatar to the physical avatar space in the augmented reality environment corresponding to the physical space occupied by the user in the real-world environment, and optionally configuring or arranging the virtual avatar to sit or stand within the physical avatar space to which they have been assigned.

5. The computer-implemented method of any preceding claim, wherein when the number of virtual avatars requiring an avatar space is greater than the number of available physical avatar spaces, the method further comprises:
determining a number of augmented avatar spaces within the augmented reality environment, wherein each augmented avatar space is sized to receive a single virtual avatar and corresponds to a physical space within the real-world environment that does not include a physical surface suitable for receiving a user; and
when the number of virtual avatars is greater than the number of available physical avatar spaces and less than or equal to the number of augmented avatar spaces:
assigning a respective virtual avatar to each augmented avatar space; and
updating the augmented reality environment to create, in each augmented avatar space, a surface for receiving the virtual avatar.

6. The computer-implemented method of claim 5, wherein the step of determining the number of augmented avatar spaces further comprises:
identifying one or more unoccupied spaces within the augmented reality environment;
determining if each of the one or more unoccupied spaces can encompass one or more augmented avatar spaces; and
when it is determined that an unoccupied space can encompass one or more augmented avatar spaces, defining a portion of the unoccupied space as an augmented avatar space.

7. The computer-implemented method of claim 5 or claim 6, wherein when the number of virtual avatars in excess of the number of available physical avatar spaces is greater than the number of augmented avatar spaces, the method further comprises:
replacing the augmented reality environment with a virtual reality environment;
wherein the virtual reality environment comprises a virtual avatar space for each virtual avatar.

8. The computer-implemented method of claim 7, wherein each physical avatar space and each augmented avatar space of the augmented reality environment is recreated as a respective virtual avatar space in the virtual environment.

9. The computer-implemented method of any one of claims 1 to 4, wherein when the number of virtual avatars requiring an avatar space is greater than the number of available physical avatar spaces, the method further comprises:
replacing the augmented reality environment with a virtual reality environment;
wherein the virtual reality environment comprises a virtual avatar space for each virtual avatar.

10. The computer-implemented method of claim 9, wherein each physical avatar space is recreated as a respective virtual avatar space in the virtual environment.

11. The computer-implemented method of any one of claims 7 to 10, wherein the virtual reality environment is based on the augmented reality environment with an augmentation function applied, wherein the augmentation function comprises one or more of:
enlarging the augmented reality environment;
removing one or more physical objects from the augmented reality environment that are not associated with a physical avatar space or an augmented avatar space;
repositioning one or more physical objects with respect to their corresponding physical location in the real-world environment.

12. The computer-implemented method of any of claims 7 to 10, wherein the virtual reality environment is based on the augmented reality environment with an augmentation function applied, wherein the augmentation function comprises replicating a physical object from the augmented reality environment at a new position in the virtual reality environment, such that the virtual reality environment comprises a plurality of the same physical object, and wherein each virtual avatar assigned to a given avatar space views the augmented reality environment or the virtual reality environment with a unique perspective view, wherein each unique perspective view comprises only one of the plurality of the same physical object such that each virtual avatar views a unique scene relative to the virtual avatars position within the virtual reality environment.

13. The computer-implemented method of any preceding claim, wherein the input data comprises:
an image or scan of the user's real-world physical environment, such that the augmented reality environment is generated to represent the user's physical environment; and/or
input video game data, such that the augmented reality environment is generated to facilitate a video game to be played.

14. A computing device comprising:
a processor; and
memory, the memory communicatively coupled to the processor, the memory comprising instructions operable, when executed by the processor, to cause the processor to carry out the method of any preceding claim.

15. A non-transitory computer-readable medium comprising instructions which when executed in a computerized system comprising at least one processor, cause the at least one processor to carry out the method of any one of claims 1 to 13.
